# EUROPÄISCHE PATENTSCHRIFT

(11) **EP 4 146 428 B1**
(45) Veröffentlichungstag und Bekanntmachung des Hinweises auf die Patenterteilung: **12.02.2025**
(21) Anmeldenummer: 21725439.0
(22) Anmeldetag: 05.05.2021
(51) Int. Cl.: B23K 26/00, F16D 65/12, C23C 24/00, B23K 26/342, F16D 65/02

(54) **BAUTEIL EINER BREMSE FÜR EIN FAHRZEUG UND VERFAHREN ZU SEINER HERSTELLUNG**
COMPONENT OF A BRAKE FOR A VEHICLE AND METHOD FOR THE PRODUCTION THEREOF
PIÈCE DE FREIN POUR VÉHICULE ET SON PROCÉDÉ DE PRODUCTION

(30) Priorität: 05.05.2020 DE 102020112100
(43) Veröffentlichungstag der Anmeldung: 15.03.2023
(73) Patentinhaber: Fritz Winter Eisengiesserei GmbH & Co. KG, 35260 Stadtallendorf (DE)
(72) Erfinder: RIEHL, Sven, 35285 Gemünden (DE); MÜLLER, Tobias, 35260 Stadtallendorf (DE); WEISER, Axel, 35683 Dillenburg (DE)
(74) Vertreter: Cohausz & Florack
(86) Internationale Anmeldenummer: PCT/EP2021/061809
(87) Internationale Veröffentlichungsnummer: WO 2021/224308

(56) Entgegenhaltungen:
- DE-A1- 102006 035 948
- DE-A1- 102006 060 775
- DE-A1- 102018 120 897
- DE-A1- 102019 212 844
- US-A1- 2018 180 125

## Beschreibung

Die Erfindung betrifft ein Bauteil einer Bremse für ein Fahrzeug, mit einem metallischen Grundkörper, der eine Fläche aufweist, die zur Erhöhung ihrer Verschleißbeständigkeit mit einer Beschichtung versehen ist, die eine auf dem Grundkörper aufliegende Zwischenschicht und eine auf der Zwischenschicht aufliegende Deckschicht umfasst, die aus einer Edelstahlmatrix mit darin eingebetteten Hartstoffpartikeln gebildet ist.

Ebenso betrifft die Erfindung ein Verfahren zur Herstellung eines Bauteils für eine Bremse für ein Fahrzeug, bei dem auf einer Fläche eines Grundkörpers des Bauteils eine Zwischenschicht erzeugt wird und bei dem anschließend auf die Zwischenschicht durch ein weiteres Laserauftragsschweißverfahren, bei dem ein Laserstrahl über ein auf die freie Oberfläche der Zwischenschicht aufgetragenes Edelstahlpulver bewegt wird, eine Deckschicht erzeugt wird, die aus einer Edelstahlmatrix mit darin eingebetteten Hartstoffpartikeln gebildet ist.

Ein als innenbelüftete Bremsscheibe ausgestaltetes Bauteil dieser Art ist aus der DE 10 2008 053 637 B4 bekannt. Die am Reibring der Bremsscheibe ausgebildete, bei einem Bremsvorgang durch einen gegen sie gedrückten Bremsbelag belastete Reibfläche ist bei dieser Bremsscheibe mit einer zweischichtig aufgebauten Beschichtung belegt, bei der eine Zwischenschicht unmittelbar auf die Reibfläche des Grundkörpers der Bremsscheibe aufgetragen ist und zur Anbindung der darauf liegenden äußeren Deckschicht der Beschichtung sowie zur thermischen Ableitung der in die äußere Schicht bei einem Bremsvorgang eingetragenen Wärmeenergie dient. Die Zwischenschicht besteht dabei aus einer Legierung auf Zink- und/oder Nickelbasis, wogegen die Deckschicht eine Carbidschicht oder eine Metallmatrixcomposit-Schicht ist. Die Dicke der Beschichtung ist auf die geometrischen Verhältnisse der innenbelüfteten Scheibe abgestimmt, indem die Dicke der Beschichtung oberhalb der Kühlkanäle der Bremsscheibe größer ist als oberhalb der die Kühlkanäle voneinander abgrenzenden Noppen oder Stege.

In der DE 10 2005 008 569 A1 ist ebenfalls eine Bremsscheibe beschrieben, auf deren Reibfläche ebenfalls eine aus zwei Schichten bestehende Beschichtung aufgebracht worden ist. Die Schichten werden aus Beschichtungspulvern erzeugt. Die Beschichtungspulver sind derart zusammengesetzt, dass sie eine Matrix auf Nickel- oder Nickel-Kobalt-Basis bilden, in die zur Einstellung der benötigten Härte Hartstoffpartikel, wie WC oder TiO₂, eingelagert sind. Das jeweilige Beschichtungspulver wird durch Hochgeschwindigkeitsflammspritzen auf die zu beschichtenden Flächen der Bremsscheibe aufgebracht, wobei zuerst eine dünne Zwischenschicht und anschließend eine dickere Deckschicht aufgespritzt werden. Anschließend erfolgt eine Wärmebehandlung, bei der die zuvor aufgespritzten Schichten aufgeschmolzen werden, um ihre stoffschlüssige Anbindung an den aus Graugusswerkstoff bestehenden Grundkörper der Bremsscheibe zu bewirken. Dabei sind die Zähigkeit und Härte der Schichten so aufeinander abgestimmt, dass durch die Zwischenschicht die Anbindung der Deckschicht gewährleitet ist.

Aus der US 5,407,035 A ist es des Weiteren bekannt, eine Beschichtung auf einer Reibfläche einer Bremsscheibe mindestens zweischichtig so auszubilden, dass über eine auf dem Grundkörper der Bremsscheibe liegende Zwischenschicht eine Anbindung der auf ihr liegenden Deckschicht erzielt wird, wobei die Dicke der Zwischenschicht deutlich kleiner ist als die Dicke der Deckschicht.

Ein Bauteil und ein Verfahren der eingangs angegebenen Art sind aus der WO 2020/043712 A1 bekannt. Dabei umfasst das aus dieser Veröffentlichung bekannte Bauteil einen metallischen Grundkörper, der eine Fläche aufweist, die zur Erhöhung ihrer Verschleißbeständigkeit mit einer Beschichtung versehen ist, die eine auf dem Grundkörper aufliegende Zwischenschicht und eine auf der Zwischenschicht aufliegende Deckschicht umfasst, wobei die Zwischenschicht eine höhere Zähigkeit besitzt als die Deckschicht, die wiederum eine höhere Härte besitzt als die Zwischenschicht. Um die Herstellung eines solchen Bauteils zu vereinfachen und seine Verschleißbeständigkeit zu steigern, besteht die Zwischenschicht aus einer Ni- oder Cr-Legierung mit einem Ni- oder Cr-Gehalt von jeweils mehr als 50 Gew.-% und optional zur Verbesserung der Verschleißbeständigkeit in die Zwischenschicht eingelagerten Hartstoffpartikeln. Die Deckschicht ist dagegen aus einer Edelstahlmatrix mit darin eingelagerten Hartstoffpartikeln gebildet, wobei die Wärmeleitfähigkeit des Grundköpers um das 1,5- bis 3-fache größer ist als die Wärmeleitfähigkeit der Zwischenschicht, die Wärmeleitfähigkeit der Deckschicht um das 2- bis 4,5-fache größer ist als die Wärmeleitfähigkeit des Grundkörpers und wobei für das aus der Dicke Dz der Zwischenschicht und der Dicke Dd der Deckschicht gebildete Dickenverhältnis gilt Vd = Dd/Dz gilt Vd ≥ 1,5.

Für den Auftrag der Deckschicht ist in der WO 2020/043712 A1 ein Hochgeschwindigkeits-Laserauftragsschweiß-Verfahren vorgesehen, wie es in der DE 10 2011 100 456 B4 beschrieben ist. Bei diesem Verfahren wird auf einer zu beschichtenden Fläche ein Schmelzbad mit zumindest einem geschmolzenen Zusatzwerkstoff mittels eines auf das Schmelzbad einstrahlenden Laserstrahls erzeugt, indem Pulver des Zusatzwerkstoffes mittels des Laserstrahls geschmolzen wird, wobei der Zusatzwerkstoff in einem Abstand zum Schmelzbad durch den Laserstrahl geschmolzen wird und dem Schmelzbad in vollständig geschmolzener Form zugeführt wird. Dabei werden das Schmelzbad und ein Fokus des Laserstrahls parallel zueinander relativ zur zu beschichtenden Fläche mit einer Geschwindigkeit von mindestens 20 m/min verschoben und die Pulverdichte so eingestellt, dass eine Laserleistung des Laserstrahls im Schmelzbad weniger als 60 % der Laserleistung vor Kontakt des Laserstrahls mit dem Pulver beträgt. Durch den Einsatz derartiger Verfahren kann eine besonders intensive Anbindung der Zwischenschicht an den Grundkörper und der Deckschicht bewirkt werden, so dass die Gefahr einer Delamination der Deckschicht von der Zwischenschicht oder der Beschichtung insgesamt vom Grundkörper im besonderen Maße minimiert ist. Der entscheidende Vorteil des aus der DE 10 2011 100 456 B4 bekannten Verfahrens wird dabei darin gesehen, dass der Zusatzwerkstoff dem Schmelzbad in dem Aggregatzustand zugeführt wird, den das Schmelzbad auf der Oberfläche des Bauteils hat. Dadurch entfällt die Zeit zum Aufschmelzen der Pulverpartikel im Schmelzbad. Dies wiederum soll die Zeit verringern, die für die Schichtbildung notwendig ist, wodurch sich die Prozessgeschwindigkeit deutlich erhöhen lassen soll.

Die DE 10 2006 035 948 A1 betrifft eine Bremsscheibe, die einen Grundkörper aufweist, der mit einem verschleißfesten Material beschichtet ist.

Die DE 10 2006 060 775 A1 offenbart eine Keilbremse, die eine Bremsscheibe und einen mittels eines Aktuators in Längsrichtung verschiebbaren Keil umfasst.

Die US 2018/0180125 A1 offenbart ein Bremssystem, das ein Teil (z.B. eine Bremsscheibe) mit einer Oberfläche aufweist, die eine mittels einer Kaltsprüh-Laserbeschichtung aufgebrachte Metallbeschichtung umfasst.

Die DE 10 2019 212 844 A1 betrifft eine Bremsscheibe für eine Radbremse eines Landfahrzeugs, aufweisend einen aus Grauguss gebildeten Grundkörper mit wenigstens einer axialen Reibseite, wenigstens eine auf die axiale Reibseite aufgebrachte Korrosionsschutzschicht und wenigstens eine auf die Korrosionsschutzschicht aufgebrachte Verschleißschutzschicht.

Vor dem Hintergrund des Standes der Technik hat sich die Aufgabe ergeben, ein Bremsen-Bauteil der eingangs erwähnten, voranstehend im Einzelnen erläuterten Art zu schaffen, das gegenüber dem Stand der Technik weiter optimierte Gebrauchseigenschaften besitzt.

Darüber hinaus sollte ein Verfahren angegeben werden, dass die betriebssichere Herstellung eines solchen Bauteils ermöglicht.

Die Erfindung hat diese Aufgabe durch ein Bauteil gelöst, das mindestens die in Anspruch 1 angegebenen Merkmale aufweist.

Das erfindungsgemäße Verfahren zur Herstellung eines solchen Bauteils ist in Anspruch 5 genannt.

Vorteilhafte Ausgestaltungen der Erfindung sind in den abhängigen Ansprüchen angegeben und werden nachfolgend wie der allgemeine Erfindungsgedanke im Einzelnen erläutert.

Dementsprechend umfasst ein erfindungsgemäßes Bauteil einer Bremse für ein Fahrzeug einen metallischen Grundkörper, der eine Fläche aufweist, die zur Erhöhung ihrer Verschleißbeständigkeit mit einer Beschichtung versehen ist, die eine auf dem Grundkörper aufliegende Zwischenschicht und eine auf der Zwischenschicht aufliegende Deckschicht umfasst, die aus einer Edelstahlmatrix mit darin eingebetteten Hartstoffpartikeln gebildet ist.

Erfindungsgemäß weisen dabei die in die Edelstahlmatrix der Deckschicht eingebetteten Hartstoffpartikel einen mittleren Korndurchmesser von 10 µm bis 125 µm auf, wobei die Hartstoffpartikel einen nicht-aufgeschmolzenen, aus unbeeinflusstem Material der Hartstoffpartikel bestehenden Kernbereich besitzen, der zumindest abschnittsweise von einer aus Material der Edelstahlmatrix und Material des jeweiligen Hartstoffpartikels gebildeten Mischzone umgeben ist, über die die Hartstoffpartikel jeweils stoffschlüssig an die Edelstahlmatrix angebunden sind.

Bei einem erfindungsgemäßen Verfahren zur Herstellung eines Bauteils für eine Bremse für ein Fahrzeug wird in entsprechender Weise in einem ersten Schritt eine Zwischenschicht auf einer Fläche eines Grundkörpers des Bauteils erzeugt und in einem zweiten Schritt durch ein Verfahren zum Laserauftragsschweißen, bei dem ein Laserstrahl über ein auf die freie Oberfläche der Zwischenschicht aufgetragenes Edelstahlpulver bewegt wird, auf der Zwischenschicht eine Deckschicht erzeugt, die aus einer Edelstahlmatrix mit darin eingebetteten Hartstoffpartikeln gebildet ist. Dabei wird bei der Erzeugung der Deckschicht der Laserstrahl mit einer Laserintensität, die 0,1 - 2,5 KW/mm² beträgt, auf das auf die Zwischenschicht aufgetragene Edelstahlpulver gerichtet. Gleichzeitig wird der Laserstrahl so eingestellt, dass der Spot, in dem der Laserstrahl auf das aufgetragene Edelstahlpulver trifft und in dem das Edelstahlpulver zu einem Schmelzenbad aufgeschmolzen wird, einen Durchmesser von 2,5 - 15 mm aufweist. Schließlich werden in das so gebildete Schmelzenbad erfindungsgemäß Hartstoffpartikel gegeben, deren mittlerer Korndurchmesser 15 µm bis 135 µm, vorzugsweise 15 µm bis 125 µm, beträgt.

Die Erfindung geht hierbei von der Erkenntnis aus, dass dadurch, dass die Hartstoffpartikel in der Edelstahlmatrix der Deckschicht einen Kernbereich aufweisen, der über die ihn umgebende Mischzone an die Edelstahlmatrix angebunden ist, ein optimaler Halt der Hartstoffpartikel in der Edelstahlmatrix gewährleistet ist. Gleichzeitig unterstützen die in der Edelstahlmatrix erfindungsgemäß vorhandenen Hartstoffpartikel die Härte der Deckschicht optimal, da in ihrem Kernbereich ihre ursprüngliche, vor dem Einbringen in die Deckschicht gegebene Härte erhalten ist. Eine Deckschicht, in der Hartstoffpartikel in erfindungsgemäßer Weise stoffschlüssig verankert sind, leistet daher einen optimalen Beitrag zur Verschleißbeständigkeit und Wirksamkeit eines mit einem erfindungsgemäßen Beschichtungssystem beschichteten Bremsenbauteils.

Bei einer erfindungsgemäßen Deckschicht ist somit zwischen den Hartstoffpartikeln und dem Werkstoff der sie umgebenden Edelstahlmatrix eine Zwischenschicht vorhanden, die sich in ihrer Zusammensetzung sowohl von der Zusammensetzung der Hartstoffpartikel als auch der Edelstahlmatrix unterscheidet. Diese aus miteinander vermischtem Werkstoff der Edelstahlmatrix und der Hartstoffpartikel bestehende, den Kern der Hartstoffpartikel typischerweise vollständig umgrenzende Mischschicht bildet sich, wenn die Hartstoffpartikel im Zuge der für die Erzeugung der Deckschicht durchgeführten Laserstrahlbehandlung partiell aufgeschmolzen werden, so dass aufgeschmolzener Werkstoff der Edelstahlmatrix und aufgeschmolzener Werkstoff des jeweiligen Hartstoffpartikels unter Ausbildung der Mischschicht ineinander fließen würden. Indem erfindungsgemäß einerseits nur ausreichend große Körner in die Edelstahlmatrix der Deckschicht eingebettet werden und andererseits die für das Einbetten der Hartstoffpartikel in die Edelstahlmatrix erforderliche Laserenergiedichte beim erfindungsgemäßen Verfahren entsprechend der Maßgabe der Erfindung begrenzt wird, wird die Ausprägung der Mischschicht unterstützt und gleichzeitig ein vollständiges Aufschmelzen der Hartstoffpartikel sicher vermieden.

Im Ergebnis führt der Umstand, dass erfindungsgemäß die in die Deckschicht eingebetteten Hartstoffpartikel nicht vollständig aufgeschmolzen, sondern in ihrem Kernbereich erhalten geblieben sind, zu einer maximierten Standfestigkeit und damit einhergehend maximierten Wirksamkeit der erfindungsgemäß ausgebildeten Beschichtung.

Die Parameter des zur Erzeugung der Deckschicht eingesetzten Laserauftragsschweißverfahrens sind dementsprechend erfindungsgemäß so gewählt, dass der lokale, über den Laserstrahl erfolgende Wärmeeintrag in das zur Bildung der Deckschicht auf die Zwischenschicht aufgebrachte Edelstahlpulver zwar ausreicht, um das Pulver im Bereich des Laserspots, also dem Auftreffbereich des Laserstrahls, aufzuschmelzen, gleichzeitig aber so beschränkt ist, dass das Aufschmelzen der Hartstoffpartikel, die in das im Laserspot gebildete Schmelzenbad eingebracht werden, auf den Umfangsbereich der Hartstoffpartikel beschränkt bleibt. Auf diese Weise wird verfahrenstechnisch eine intensive stoffschlüssige Anbindung der Hartstoffpartikel über die sich aus dem aufgeschmolzenen Umfangsbereich der Hartstoffpartikel und die angrenzende schmelzflüssige Edelstahlmatrix bildenden Mischzone hergestellt, während der Kernbereich der Hartstoffpartikel in dem Zustand erhalten bleibt, in dem die Hartstoffpartikel in das Schmelzenbad eingebracht werden.

Gleichzeitig sind die Laserintensität und der Durchmesser der Spots, in dem der Laser auf das Edelstahlpulver trifft, so aufeinander abgestimmt, dass die sich in ihm bildende Schmelze trotz der Zufuhr der Hartstoffpartikel möglichst lange schmelzflüssig bleibt. In Folge dessen haben die in das Schmelzenbad eingebrachten Hartstoffpartikel ausreichend Zeit, um sich vor der Erstarrung der Schmelze gleichmäßig im Schmelzenbad zu verteilen.

Im Ergebnis zeichnet sich deshalb ein erfindungsgemäß beschichtetes Bauteil dadurch aus, dass die Hartstoffpartikel in der Deckschicht in einer homogen gleichmäßigen Verteilung vorliegen. Dies trägt wiederum zur Gleichmäßigkeit bei, mit der bei einem erfindungsgemäßen Bauteil die hohe Verschleißfestigkeit über die mit der Deckschicht belegten Fläche verteilt vorliegt.

Optimierte Herstellungsergebnisse lassen sich beim erfindungsgemäßen Verfahren dann erzielen, wenn die Laserintensität des für die Erzeugung der Deckschicht eingesetzten Laserstrahls maximal 1,2 KW/mm² beträgt.

Dabei lassen sich die erfindungsgemäß vorgegebenen Laserintensitäten unter Berücksichtigung der erfindungsgemäß vorgegebenen Größe des Spots, in dem der Laser auf das die Matrix der Deckschicht bildende Edelstahlpulver fällt, dadurch erreichen, dass die Laserleistung des für die Erzeugung der Deckschicht eingesetzten Laserstrahls 6 - 25 KW beträgt.

Eine weitere Stellgröße, über die die Laserintensität und damit der lokale Wärmeeintrag im Bereich des Spots, in dem der Laserstrahl auf das die Edelstahlmatrix bildende Pulver fällt, beeinflusst werden kann, ist der Durchmesser des Spots. Dieser beträgt erfindungsgemäß 2,5 - 15 mm, wobei sich Durchmesser von mindestens 8 mm bei der praktischen Erprobung als besonders tauglich herausgestellt haben und optimierte Bearbeitungsergebnisse bei Spot-Durchmessern von höchstens 12,5 mm erzielt werden konnten.

Die Dicke der erfindungsgemäß aufgebrachten Deckschicht beträgt nach einem Schleifen typischerweise von 50 - 200 µm, insbesondere 50 - 150 µm, wobei sich Dicken der Deckschicht von 80 - 140 µm bei praktischen Versuchen als besonders günstig erwiesen haben. Im ungeschliffenen Zustand beträgt die Dicke der Deckschicht dagegen typischerweise 50 - 300 µm.

Der Auftrag der erfindungsgemäß vorgesehenen Zwischenschicht auf die jeweilige zu beschichtende Fläche des Bauteils kann grundsätzlich mit jedem thermischen Auftragsverfahren, wie dem Auftragsschweißen, dem Spritzschweißen oder dem Plasmaschweißen, vorgenommen werden. Die hierzu erforderlichen Techniken sind aus dem Stand der Technik grundsätzlich bekannt. Beispielsweise eignet sich hierzu das oben bereits erwähnte, in der DE 10 2011 100 456 B4 angegebene Hochgeschwindigkeits-Laserauftragsschweiß-Verfahren.

Die Zwischenschicht kann aus einem für diesen Zweck im Stand der Technik bereits eingesetzten Stahl, insbesondere einem an sich bekannten Edelstahlwerkstoff, bestehen, der eine ausreichende Zähigkeit besitzt. Ein Beispiel für einen solchen Edelstahlwerkstoff ist der gemäß den US-Normen AISI/ASTM genormte Stahl 316L.

Die bei der erfindungsgemäßen Beschichtung vorgesehene Zwischenschicht erfüllt mehrere Funktionen. Sie dient einerseits zum Ausgleich von Unebenheiten und Vertiefungen, wie Poren oder Ausbrüche, die an der mit der Beschichtung belegten Fläche des jeweiligen Bauteils vorhanden sind. Andererseits nimmt die Zwischenschicht temperaturbedingte Spannungen auf und gleicht sie aus.

Um diese Anforderungen zu erfüllen, kann die Zwischenschicht eine Dicke von 50 - 200 µm, insbesondere 50 - 150 µm, aufweisen, wobei sich Zwischenschicht-Dicken von 80 - 140 µm bei praktischen Versuchen als besonders günstig erwiesen haben.

Die Matrix der Deckschicht wird erfindungsgemäß durch einen Edelstahl gebildet. Zu diesen Edelstählen zählen insbesondere die nichtrostenden, austenitischen Stähle. Hierzu geeignet sind beispielsweise Edelstähle, die unter der Werkstoffnummer 1.4404 oder gemäß den US-Normen AISI/ASTM in der Nummernreihe 316 - 431L genormt sind. Dabei sind Stähle mit reduziertem oder nicht wirksam vorhandenen Ni-Gehalten besonders bevorzugt.

Die in die Matrix der Deckschicht eingebetteten Hartstoffpartikel gewährleisten die erforderliche Härte und die damit einhergehende Verschleißbeständigkeit der Deckschicht. Hierzu geeignete Hartstoffpartikel sind insbesondere metallartige, kovalente oder ionische Karbide. Zu den Hartstoffen, die erfindungsgemäß in der Deckschicht und optional in der Zwischenschicht vorhanden sind, zählen hier insbesondere Wolframcarbide, Chromcarbide, Titancarbide, Vanadiumcarbide oder Siliziumcarbide. Ein hinsichtlich der Gebrauchseigenschaften der Deckschicht optimales Verhältnis von Matrixwerkstoff zu Hartstoffpartikeln ergibt sich dann, wenn der Volumenanteil der in die Stahlmatrix der Deckschicht eingebetteten Hartstoffpartikel am Gesamtvolumen der Deckschicht 20 - 70 Vol.-% beträgt. Noch höhere Hartstoffgehalte würden die Festigkeit und die Wärmeübergangswerte der Deckschicht verschlechtern. Bei niedrigeren Hartstoffgehalten würde die geforderte Härte nicht erreicht.

Ihre Wirkung entfalten die erfindungsgemäß in die Edelstahlmatrix der Deckschicht eingebetteten Hartstoffpartikel, wenn sie mit einer durchschnittlichen Korngröße von 15 - 135 µm in die Deckschicht eingebracht werden. Im in die Deckschicht eingebetteten Zustand weisen die unverändert gebliebenen, nicht aufgeschmolzenen Kernbereiche der Hartstoffpartikel immer noch einen Durchmesser von 15 - 125 µm auf. Bei praktischen Erprobungen besonders bewährt hat es sich dabei, wenn die in die Edelstahlmatrix der Deckschicht eingebrachten Hartstoffpartikel einen mittleren Korndurchmesser von höchstens 105 µm aufweisen. Erfindungsgemäß lassen sich somit Hartstoffpartikel mit einem breiten Korngrößenspektrum verarbeiten. Dies ermöglicht eine besonders kostengünstige Erzeugung der erfindungsgemäßen Deckschicht. Für gehobene Anforderungen können die Korngrößen der Hartstoffpartikel stärker selektiert werden. So kann es zweckmäßig sein, Hartstoffpartikel mit einem mittleren Korndurchmesser von mindestens 20 µm, insbesondere mindestens 35 µm oder mindestens 45 µm, in die Deckschicht einzubringen. Dementsprechend betragen die mittleren Korndurchmesser der erfindungsgemäß in die Deckschicht eingebrachten Hartstoffpartikel vorzugsweise 20 - 105 µm, insbesondere 35 - 105 µm oder 45 - 105 µm oder 20 - 60 µm, wobei bei Hartstoffpartikeln mit einer mittleren Korngröße von 35 - 60 µm, insbesondere 45 - 60 µm, besonders gute Ergebnisse zu erwarten sind. Hartstoffpartikel-Fraktionen von 20 - 60 µm, insbesondere 35 - 60 µm oder 45 - 60 µm, eignen sich hier besonders für Anwendungsfälle, bei denen der Laser-Spot einen kleineren Durchmesser von bis zu 8 mm aufweist, während sich Körnungen von 35 - 105 µm, insbesondere 45 - 105 µm, für die Bearbeitung mit einem Spot-Durchmesser ≥ 8 mm eignen.

Die gemäß DIN EN ISO 6507-1 ermittelte Härte der Deckschicht einer erfindungsgemäßen Beschichtung beträgt durch die erfindungsgemäße Einbettung der Hartstoffpartikel 700 HV10 bis 1250 HV10. Typischerweise weist die Deckschicht einer erfindungsgemäßen Beschichtung eine Härte von 850 - 1050 HV10 auf.

Dabei zeichnet sich ein erfindungsgemäßes Bauteil aufgrund der durch die Erfindung erzielten homogenen Verteilung der in die Deckschicht eingebetteten Hartstoffpartikel dadurch aus, dass der Unterschied zwischen dem an der freien Oberfläche der Deckschicht ermittelten kleinsten Wert Hmin der Oberflächenhärte und dem an der freien Oberfläche der Deckschicht ermittelten größten Wert Hmax der Oberflächenhärte höchstens 250 HV10, insbesondere 100 HV10 beträgt (d.h. [Hmax - Hmin] ≤ 100 HV10).

Eine besonders gute Wirkung zeigt die Erfindung im Fall, dass das erfindungsgemäß beschichtete Bauteil ein Reibring einer Bremsscheibe ist und die mit der Beschichtung belegte Fläche eine an dem Reibring vorhandene Reibfläche ist, gegen die bei einem Bremsvorgang eine Betätigungseinrichtung mit einem Bremsbelag wirkt. Dabei kann der Reibring ein separat gefertigtes Bauelement der Bremsscheibe darstellen, das in einem besonderen Montageschritt mit dem jeweiligen Tragteil der Bremsscheibe verbunden wird, wie es bei so genannten "gebauten Bremsscheiben" oder bei Bremsscheiben der Fall ist, bei denen das Tragteil in einem gesonderten Arbeitsschritt an den Reibring oder der Reibring in einem gesonderten Arbeitsschritt an das Tragteil angegossen wird. Ebenso kann der Reibring selbstverständlich Teil einer in einem Stück, insbesondere gießtechnisch, gefertigten Bremsscheibe sein, bei der Tragteil und Reibring einstückig miteinander verbunden sind.

Stellt sich heraus, dass an der freien Oberfläche der Deckschicht einer erfindungsgemäß aufgebrachten Beschichtung eine zu große Rauigkeit oder Unebenheit vorliegt, so kann der betreffenden Oberfläche durch Schleifen eine ausreichende Planheit und Rauigkeit verliehen werden. Im Fall, dass es sich bei der erfindungsgemäß beschichteten Fläche um die Reibfläche einer Bremsscheibe handelt, ist die Zielgröße dabei eine gemäß DIN EN ISO 4288 ermittelte Mittenrauigkeit Ra von 1 - 3,2 µm, insbesondere 1,4 - 1,7 µm, und eine Planheitsabweichung von höchstens 20 µm.

Bei dem Werkstoff, aus dem der Grundkörper des erfindungsgemäßen Bauteils besteht, handelt es sich typischerweise um einen metallischen Gusswerkstoff, der die gießtechnische Herstellung des Grundkörpers ermöglicht. Hierzu zählen insbesondere Eisen- oder Aluminiumgusswerkstoffe, deren Wärmeleitfähigkeit den Maßgaben der Erfindung besonders gut entsprechen und die insbesondere zur Herstellung von Reibringen geeignet sind.

Um das im Laser-Spot aus dem Edelstahlpulver der Edelstahlmatrix gebildete Schmelzbad möglichst lange aufrechtzuerhalten, kann es zweckmäßig sein, das Bauteil vor dem Auftreffen des Laserstrahls auf eine 100 - 700 °C betragende Vorwärmtemperatur vorzuwärmen. Auf diese Weise lässt sich der Wärmeabfluss aus dem Schmelzenbad in den Grundkörper des Bauteils verzögern, so dass auch die Erstarrung des Matrixwerkstoffs der Deckschicht langsamer abläuft.

Für die Vorwärmung kann das Bauteil im Ganzen in einem geeigneten Ofen erwärmt werden. Bei größeren Bauteilen oder solchen Bauteilen, bei denen nur bestimmte Flächenabschnitte beschichtet werden sollen, kann die Vorerwärmung auch auf die zu beschichtenden Flächenabschnitte beschränkt werden. Dabei können aneinander angrenzende Flächenabschnitte sukzessive nacheinander und der Beschichtung vorlaufend erwärmt werden. Hierzu eignet sich insbesondere eine Induktionserwärmung. Als besonders praxisgerecht erweist es sich hier, wenn dem Laser-Spot vorauseilend eine jeweils lokal begrenzte Induktionserwärmung erfolgt, wenn also das Bauteil sukzessive, dem Laserstrahl voreilend jeweils lokal begrenzt in dem Abschnitt erwärmt wird, in dem anschließend das Edelstahlpulver durch den Laserstrahl aufgeschmolzen wird.

Vorwärmtemperaturen von 250 - 350 °C haben sich für die erfindungsgemäßen Zwecke besonders bewährt. Die Vorwärmung trägt darüber hinaus zur Verminderung von Spannungen auch zwischen der Deckschicht und der Zwischenschicht sowie zwischen der Zwischenschicht und dem Grundkörper bei.

Nachfolgend wird die Erfindung anhand eines Ausführungsbeispiels/anhand von Ausführungsbeispielen näher erläutert. Es zeigen:

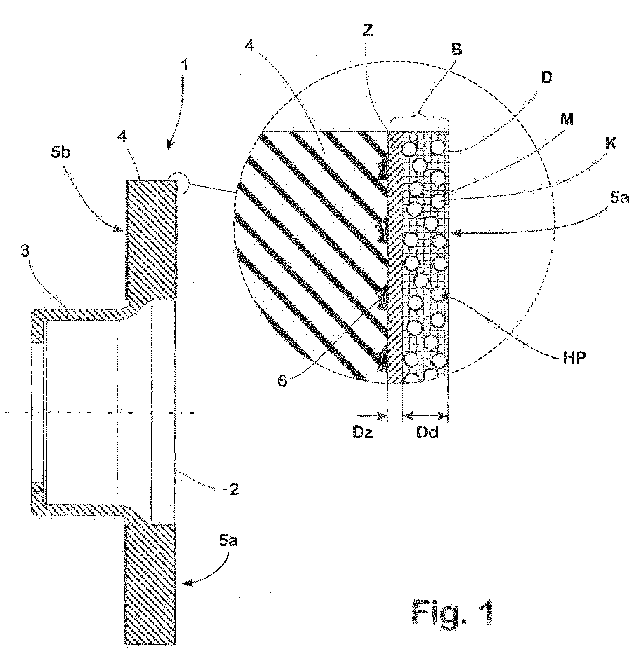

- Fig. 1: eine Bremsscheibe für ein Kraftfahrzeug in einem Schnitt längs ihrer Drehachse X-X;
- Fig. 2 - 4: quer zur Umfangsrichtung der Bremsscheibe ausgerichtete Schliffe einer auf der Bremsscheibe erzeugten Beschichtung.

Die ein Bauteil im Sinne der Erfindung darstellende Bremsscheibe 1 weist einen Grundkörper 2 auf, der in konventioneller Weise gestaltet und aus einem zu diesem Zweck bekannten Eisengusswerkstoff mit der DIN-EN-Bezeichnung EN-JL1040 gegossen ist.

Die Bremsscheibe 1 weist einen topfförmigen Tragteil 3 und einen daran angegossenen Reibring 4 auf, der hier als aus Vollmaterial bestehend dargestellt ist, genauso aber auch in konventioneller Weise als innenbelüfteter Reibring 4 ausgebildet sein kann.

Der Reibring 4 weist in ebenso üblicher Weise an seinen normal zur Drehachse X-X ausgerichteten Stirnflächen jeweils eine ringförmige Reibfläche 5a,5b auf.

Beim für die Beschichtung bereitgestellten Grundkörper 2 sind Reibflächen 5a,5b nach dem Gießen des Grundkörpers 2 durch eine spanabhebende Bearbeitung in an sich bekannter Weise so vorbereitet worden, dass sie an ihrer Oberseite eine gemittelte Rautiefe Rz von 20 µm aufweisen.

Auf die so bearbeiteten Reibflächen 5a,5b des Grundkörpers 2 ist eine Beschichtung B aufgebracht, die aus einer Zwischenschicht Z und einer Deckschicht D besteht.

Die Zwischenschicht Z ist aus einem handelsüblichen, pulverförmig bereitgestellten Edelstahlwerkstoff, beispielsweise dem oben bereits erwähnten, unter der Bezeichnung 316L genormten Edelstahlwerkstoff, erzeugt worden. Die Dicke Dz der Zwischenschicht Z betrug 120 - 140 µm.

Zum Auftragen der Zwischenschicht Z ist die Bremsscheibe in eine horizontale Position in einer hier nicht gezeigten Spanneinrichtung positioniert worden, die mittels eines hier ebenfalls nicht gezeigten Drehantriebs um die Drehachse X-X der Bremsscheibe 1 rotierend antreibbar war. Anschließend ist die Zwischenschicht Z mittels Laserauftragsscheißen erzeugt worden. Dazu ist eine hier nicht gezeigte Laserstrahleinrichtung (Laserkopfdurchmesser = 5 mm) in einer Startposition am Innendurchmesser des Reibrings 4 positioniert worden und die Bremsscheibe 1 mit 60 Umdrehungen pro Minute gedreht worden. Ausgehend von der Startposition ist der Laser dann mit einer Geschwindigkeit von 10 m/min radial in Richtung des äußeren Umfangs des Reibrings bewegt worden. Beim Anfahren ist der Laser gezündet und beim Erreichen des Außendurchmessers abgeschaltet worden. Mit Beginn der Laserbestrahlung ist der pulverförmige Stahlwerkstoff der Zwischenschicht Z gemäß der in der DE 10 2011 100 456 B4 beschriebenen Vorgehensweise in den vom Laserstrahl jeweils überstrichenen Bereich gegeben worden.

Durch die Zwischenschicht Z sind an den Reibflächen 5a,5b vorhandene Unebenheiten ausgeglichen und Poren 6 geschlossen worden, so dass nach dem Auftrag der Zwischenschicht Z an ihrer von dem Grundkörper 2 abgewandten Seite eine ebene, optimal für den Auftrag einer Deckschicht D geeignete Oberfläche vorhanden war.

Auf drei jeweils in der voranstehend beschriebenen Weise mit der Zwischenschicht Z belegten Bremsscheiben 1 ist in drei Versuchen eine Deckschicht D wie folgt aufgebracht worden:
Es sind Hartstoffpartikel HP bereitgestellt worden, bei denen es sich um Wolframkarbid-Partikel handelte.

Die Hartstoffpartikel HP wiesen einen mittleren Korndurchmesser von - 25 - 60 µm auf.

Auf die wie zum Aufbringen der Zwischenschicht Z drehantreibbar eingespannte Bremsscheibe 1 ist eine Schicht aus Pulver aufgebracht worden, das aus einem unter der Werkstoffnummer 1.4404 gemäß StahlEisen-Liste genormten Edelstahl bestand.

Auf das Pulver ist ein Laserstrahl gerichtet worden, der bei den Versuchen 1 und 2 in einem Spot mit einem Durchmesser von 2,9 mm und im Versuch 3 in einem Spot mit einem Durchmesser von 1,2 mm auf den sich jeweils unter ihm befindlichen Abschnitt der Pulverschicht getroffen ist.

Beim Versuch 1 betrug die Laserintensität dabei 0,2 KW/mm², beim Versuch 2 hatte der Laser eine Intensität von 2,20 KW/mm² und beim nicht erfindungsgemäßen Versuch 3 eine Laserintensität von 3,50 KW/mm².

Durch Drehen der Bremsscheibe 1 um die Drehachse X-X ist die Pulverschicht unter dem Laserstrahl her und damit einhergehend der Laserspot sukzessive über die Pulverschicht bewegt worden, bis nach einer entsprechenden Anzahl von Umläufen das Edelstahlpulver vollständig aufgeschmolzen und unter Ausbildung der Edelstahlmatrix E der Deckschicht D wieder erstarrt ist.

In das jeweils im Spot des Laserstrahls aus dem Edelstahlpulver sich bildende Schmelzenbad ist eine Menge der bereitgestellten Hartstoffpartikel HP eingebracht worden, die so bemessen war, dass im Schmelzenbad eine Stahlschmelze vorlag, die zu 40 % aus den Hartstoffpartikeln HP und als Rest aus der Edelstahlschmelze bestand.

Die so erzeugte Deckschicht D wies eine Dicke Dd von 250 µm bei einer Oberflächenhärte von 950 - 1500 HV10 auf.

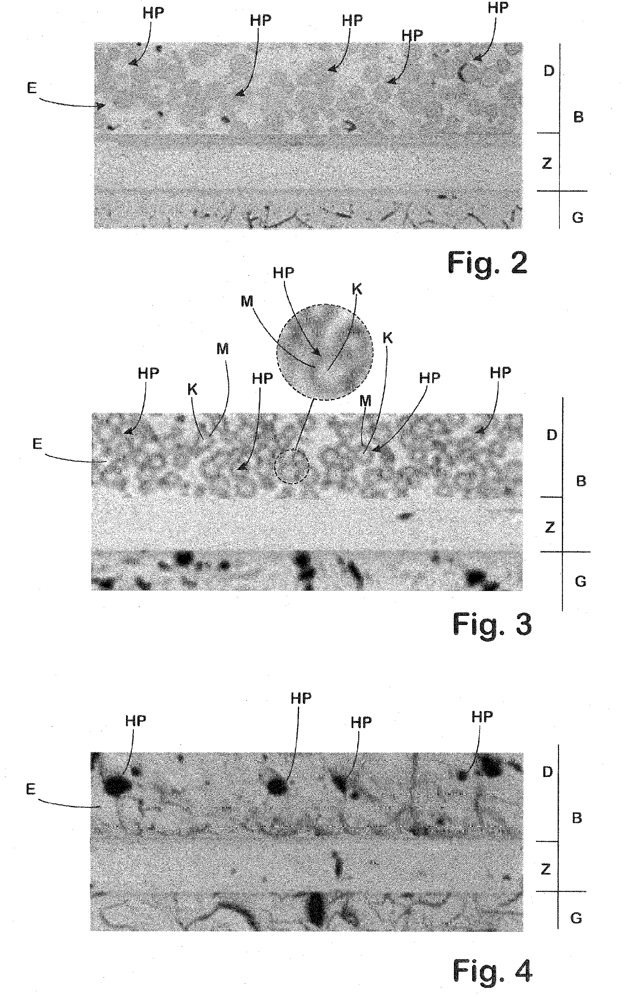

An den so beschichteten Bremsscheiben 1 sind quer zur Umfangsrichtung ausgerichtete Schliffe erzeugt worden, die in den Figuren 2 (Versuch 1), 3 (Versuch 2) und 4 (Versuch 3) wiedergegeben sind.

Zu erkennen ist in den Figuren 2 - 4 der Eisengusswerkstoff G der Bremsscheibe 1, die auf dem Eisengusswerkstoff G liegende Zwischenschicht Z und die auf der Zwischenschicht Z liegenden Deckschicht D mit den darin eingelagerten Hartstoffpartikeln HP.

Die Hartstoffpartikel HP weisen jeweils einen deutlich erkennbaren inneren Kernbereich K auf, der nicht aufgeschmolzen ist und sich dementsprechend in dem Zustand befindet, in dem die Hartstoffpartikel HP bei der Erzeugung der Deckschicht D in das durch den Laserstrahl aus dem Edelstahlpulver erzeugte Schmelzenbad eingebracht worden ist.

Der Kernbereich K der Hartstoffpartikel HP ist jeweils umgeben von einer Mischzone M, in der Material des Hartstoffpartikels HP mit dem Edelstahlwerkstoff der Edelstahlmatrix E der Deckschicht D vermischt vorliegen. Über die Mischzone M sind die Hartstoffpartikel HP mit ihrem Kernbereich K stoffschlüssig an die Edelstahlmatrix E angebunden.

Es zeigt sich, dass bei den erfindungsgemäß, d.h. mit einer Laserintensität, für die 0,1 ≤ Laserintensität ≤ 2,5, durchgeführten Versuchen die Kernbereiche K der Hartstoffpartikel HP in der Edelstahlmatrix E in einer eindeutig definierten Form vorlagen.

Beim aufgrund der zu hohen Laserintensität nicht erfindungsgemäßen Versuch 3 liegen dagegen die Hartstoffpartikel HP aufgeschmolzen und stark verformt vor, so dass sie weder hinsichtlich ihrer Gestalt noch ihrer Eigenschaften dem Ursprungszustand entsprachen, in dem sie bereitgestellt worden sind. Vielmehr bestehen die in Fig. 4 als dunkle Punkte sichtbaren Bereiche insgesamt nur noch aus Mischzonen, in denen das vollständig aufgeschmolzene Material der Hartphasen mit dem Edelstahlwerkstoff der Edelstahlmatrix E vermischt ist.

### BEZUGSZEICHEN

- 1: Bremsscheibe
- 2: Grundkörper der Bremsscheibe 1
- 3: Tragteil der Bremsscheibe 1
- 4: Reibring der Bremsscheibe 1
- 5a,5b: Reibfläche des Reibrings 4
- 6: Poren

- B: Beschichtung
- D: Deckschicht der Beschichtung B
- Dd: Dicke der Deckschicht D
- Dz: Dicke der Zwischenschicht Z
- E: Edelstahlmatrix der Deckschicht D
- G: Eisengusswerkstoff der Bremsscheibe 1
- HP: Hartstoffpartikel
- K: Kernbereich der Hartstoffpartikel
- X: Drehachse der Bremsscheibe 1
- Z: Zwischenschicht der Beschichtung B
- M: die Hartstoffpartikel HP umgebende Mischschicht

## Patentansprüche

1. Bauteil einer Bremse für ein Fahrzeug, mit einem metallischen Grundkörper, der eine Fläche (5a,5b) aufweist, die zur Erhöhung ihrer Verschleißbeständigkeit mit einer Beschichtung (B) versehen ist, die eine auf dem Grundkörper (2) aufliegende Zwischenschicht (Z) und eine auf der Zwischenschicht (Z) aufliegende Deckschicht (D) umfasst, die aus einer Edelstahlmatrix (E) mit darin eingebetteten Hartstoffpartikeln (HP) gebildet ist, **dadurch gekennzeichnet, dass** die in die Edelstahlmatrix (E) der Deckschicht (D) eingebetteten Hartstoffpartikel (HP) einen mittleren Korndurchmesser von 10 µm bis 125 µm aufweisen und **dass** die Hartstoffpartikel (HP) einen nicht-aufgeschmolzenen, aus unbeeinflusstem Material der Hartstoffpartikel (HP) bestehenden Kernbereich (K) aufweisen, der zumindest abschnittsweise von einer aus Material der Edelstahlmatrix (E) und Material des jeweiligen Hartstoffpartikels (HP) gebildeten Mischzone (M) umgeben ist, über die die Hartstoffpartikel (HP) jeweils stoffschlüssig an die Edelstahlmatrix (E) angebunden sind.

2. Bauteil nach Anspruch **1,dadurch gekennzeichnet, dass** die Edelstahlmatrix (E) der Deckschicht (D) aus einem Edelstahl mit der Werkstoffnummer 1.4404 oder einem der Edelstähle besteht, die in den USamerikanischen Normen AISI/ASTM unter den Nummern 316 - 431L genormt sind.

3. Bauteil nach einem der voranstehenden Ansprüche, **dadurch gekennzeichnet, dass** die Oberflächenhärte der Deckschicht (D) 850 - 1050 HV10 beträgt.

4. Bauteil nach Anspruch 3, **dadurch gekennzeichnet, dass** der Unterschied zwischen dem an der freien Oberfläche der Deckschicht (D) ermittelten kleinsten Wert Hmin der Oberflächenhärte und dem an der freien Oberfläche der Deckschicht (D) ermittelten größten Wert Hmax der Oberflächenhärte höchstens 100 HV10 beträgt.

5. Verfahren zur Herstellung eines Bauteils für eine Bremse für ein Fahrzeug, bei dem in einem ersten Schritt eine Zwischenschicht (Z) auf einer Fläche eines Grundkörpers (2) des Bauteils (1) erzeugt wird und bei dem in einem zweiten Schritt durch ein Verfahren zum Laserauftragsschweißen, bei dem ein Laserstrahl über ein auf die freie Oberfläche der Zwischenschicht (Z) aufgetragenes Edelstahlpulver bewegt wird, auf der Zwischenschicht (Z) eine Deckschicht (D) erzeugt wird, die aus einer Edelstahlmatrix (E) mit darin eingebetteten Hartstoffpartikeln (HP) gebildet ist, **dadurch gekennzeichnet, dass** bei der Erzeugung der Deckschicht (D) der Laserstrahl mit einer Laserintensität, die 0,1 - 2,5 KW/mm² beträgt, auf das auf die Zwischenschicht (Z) aufgetragene Edelstahlpulver gerichtet wird, dass der Spot, in dem der Laserstrahl auf das aufgetragene Edelstahlpulver trifft und in dem das Edelstahlpulver zu einem Schmelzenbad aufgeschmolzen wird, einen Durchmesser von 2,5 - 15 mm aufweist, und dass in das so gebildete Schmelzenbad Hartstoffpartikel (HP) gegeben werden, deren mittlerer Korndurchmesser 15 µm bis 135 µm beträgt.

6. Verfahren nach Anspruch 5, **dadurch gekennzeichnet, dass** die in die Edelstahlmatrix (E) der Deckschicht (D) eingebetteten Hartstoffpartikel (HP) einen mittleren Korndurchmesser von höchstens 105 µm, vorzugsweise höchstens 60 µm, aufweisen.

7. Verfahren nach Anspruch 5 oder 6, **dadurch gekennzeichnet, dass** die in die Edelstahlmatrix (E) der Deckschicht (D) eingebetteten Hartstoffpartikel (HP) einen mittleren Korndurchmesser von mindestens 20 µm aufweisen.

8. Verfahren nach Anspruch 7, **dadurch gekennzeichnet, dass** die in die Edelstahlmatrix (E) der Deckschicht (D) eingebetteten Hartstoffpartikel (HP) einen mittleren Korndurchmesser von mindestens 45 µm aufweisen.

9. Verfahren nach einem der Ansprüche 5 bis 8, **dadurch gekennzeichnet, dass** die Laserintensität des für die Erzeugung der Deckschicht (D) eingesetzten Laserstrahls maximal 1,2 KW/mm² beträgt.

10. Verfahren nach Anspruch 5 bis 9, **dadurch gekennzeichnet, dass** die Laserleistung des für die Erzeugung der Deckschicht (D) eingesetzten Laserstrahls 6 - 25 KW beträgt.

11. Verfahren nach einem der Ansprüche 5 bis 10, **dadurch gekennzeichnet, dass** das Bauteil vor dem Auftreffen des Laserstrahls auf eine 100 - 700 °C betragende Vorwärmtemperatur vorgewärmt wird.

12. Verfahren nach Anspruch 11, **dadurch gekennzeichnet, dass** das Bauteil im Ganzen vor dem Auftrag des Edelstahlpulvers auf die Vorwärmtemperatur vorgewärmt wird.

13. Verfahren nach Anspruch **11,dadurch gekennzeichnet, dass** das Bauteil lokal begrenzt in dem Abschnitt auf die Vorwärmtemperatur vorgewärmt wird, in dem anschließend das Edelstahlpulver durch den Laserstrahl aufgeschmolzen wird.

14. Verfahren nach Anspruch 13, **dadurch gekennzeichnet, dass** das Bauteil dem Laserstrahl voreilend vorgewärmt wird.

15. Verfahren nach einem der Ansprüche 11 bis 14, **dadurch gekennzeichnet, dass** die Vorerwärmung mittels induktiver Erwärmung erfolgt.

## Claims

1. Component of a brake for a vehicle, having a metallic base body which has a surface (5a, 5b) which, in order to increase its wear resistance, is provided with a coating (B) which comprises an intermediate layer (Z) lying on the base body (2) and a covering layer (D) lying on the intermediate layer (Z), which covering layer (D) is formed from a stainless steel matrix (E) with hard material particles (HP) embedded therein, **characterized in that** the hard material particles (HP) embedded in the stainless steel matrix (E) of the covering layer (D) have an average grain diameter of 10 µm to 125 µm and **in that** the hard material particles (HP) have a non-melted core region (K) consisting of uninfluenced material of the hard material particles (HP), which core region (K) is surrounded at least in sections by a mixing zone (M) formed from material of the stainless steel matrix (E) and material of the respective hard material particle (HP), via which mixing zone (M) the hard material particles (HP) are in each case materially bonded to the stainless steel matrix (E).

2. Component according to claim 1, **characterized in that** the stainless steel matrix (E) of the covering layer (D) consists of a stainless steel with the material number 1.4404 or one of the stainless steels which are standardized in the US American standards AISI/ASTM under the numbers 316 - 431L.

3. Component according to one of the preceding claims, **characterized in that** the surface hardness of the covering layer (D) is 850 - 1050 HV10.

4. Component according to claim 3, **characterized in that** the difference between the smallest value Hmin of the surface hardness determined at the free surface of the covering layer (D) and the largest value Hmax of the surface hardness determined at the free surface of the covering layer (D) is at most 100 HV10.

5. Method for manufacturing a component for a brake for a vehicle, in which, in a first step, an intermediate layer (Z) is produced on a surface of a base body (2) of the component (1) and in which, in a second step, by a method of laser deposition welding, in which a laser beam is moved over a stainless steel powder applied to the free surface of the intermediate layer (Z), a covering layer (D) is produced on the intermediate layer (Z), which covering layer (D) is formed from a stainless steel matrix (E) with hard material particles (HP) embedded therein, **characterized in that** during the producing of the covering layer (D), the laser beam is directed at the stainless steel powder applied to the intermediate layer (Z) with a laser intensity that is 0,1 - 2,5 KW/mm², **in that** the spot, in which the laser beam impinges on the applied stainless steel powder and in which the stainless steel powder is melted to form a melt bath, has a diameter of 2,5 - 15 mm, and **in that** hard material particles (HP) whose average grain diameter is 15 µm to 135 µm are added into the melt bath thus formed.

6. Method according to claim 5, **characterized in that** the hard material particles (HP) embedded in the stainless steel matrix (E) of the covering layer (D) have an average grain diameter of at most 105 µm, preferably at most 60 µm.

7. Method according to claim 5 or claim 6, **characterized in that** the hard material particles (HP) embedded in the stainless steel matrix (E) of the covering layer (D) have an average grain diameter of at least 20 µm.

8. Method according to claim 7, **characterized in that** the hard material particles (HP) embedded in the stainless steel matrix (E) of the covering layer (D) have an average grain diameter of at least 45 µm.

9. Method according to one of the claims 5 to 8, **characterized in that** the laser intensity of the laser beam used for producing of the covering layer (D) is at most 1,2 KW/mm².

10. Method according to claim 5 to 9, **characterized in that** the laser power of the laser beam used for producing of the covering layer (D) is 6 - 25 KW.

11. Method according to one of the claims 5 to 10, **characterized in that** the component is preheated to a preheating temperature of 100 - 700 °C prior to impingement of the laser beam.

12. Method according to claim 11, **characterized in that** the component as a whole is preheated to the preheating temperature prior to the application of the stainless steel powder.

13. Method according to claim 11, **characterized in that** the component is preheated to the preheating temperature in a locally restricted manner in the section in which the stainless steel powder is subsequently melted by the laser beam.

14. Method according to claim 13, **characterized in that** the component is preheated in a manner leading the laser beam.

15. Method according to one of the claims 11 to 14, **characterized in that** the preheating is carried out by means of inductive heating.

## Revendications

1. Composant d'un frein pour un véhicule, comprenant un corps de base métallique qui présente une surface (5a, 5b) qui, pour augmenter sa résistance à l'usure, est pourvue d'un revêtement (B) qui comprend une couche intermédiaire (Z) reposant sur le corps de base (2) et une couche de recouvrement (D) reposant sur la couche intermédiaire (Z), qui est formée d'une matrice en acier inoxydable (E) dans laquelle sont noyées des particules de matériau dure (HP), **caractérisé en ce que** les particules de matériau dure (HP) noyées dans la matrice en acier inoxydable (E) de la couche de recouvrement (D) présentent un diamètre moyen de grain de 10 µm à 125 µm et **en ce que** les particules de matériau dure (HP) présentent une zone centrale (K) non fondue, constituée de matériau non influencé des particules de matériau dure (HP), qui est entourée, au moins par sections, d'une zone de mélange (M) formée par le matériau de la matrice en acier inoxydable (E) et le matériau de la particule de matériau dure (HP) respective, par l'intermédiaire de laquelle les particules de matériau dure (HP) sont respectivement liées à la matrice en acier inoxydable (E) par liaison de matière.

2. Composant selon la revendication 1, **caractérisé en ce que** la matrice en acier inoxydable (E) de la couche de recouvrement (D) est constituée d'un acier inoxydable portant le numéro de matériau 1.4404 ou d'un des aciers inoxydables qui sont normalisés dans les normes américaines AISI/ASTM sous les numéros 316 - 431L.

3. Composant selon l'une des revendications précédentes, **caractérisé en ce que** la dureté de surface de la couche de recouvrement (D) est comprise entre 850 et 1050 HV10.

4. Composant selon la revendication 3, **caractérisé en ce que** la différence entre la plus petite valeur Hmin de la dureté de surface déterminée à la surface libre de la couche de recouvrement (D) et la plus grande valeur Hmax de la dureté de surface déterminée à la surface libre de la couche de recouvrement (D) est au maximum de 100 HV10.

5. Procédé de fabrication d'un composant pour un frein pour un véhicule, dans lequel, dans une première étape, une couche intermédiaire (Z) est produite sur une surface d'un corps de base (2) du composant (1) et dans lequel, dans une deuxième étape, une couche de recouvrement (D) est produite sur la couche intermédiaire (Z) par un procédé de soudage par rechargement au laser, dans lequel un faisceau laser est déplacé sur une poudre d'acier inoxydable appliquée sur la surface libre de la couche intermédiaire (Z), laquelle couche de recouvrement (D) est formée d'une matrice en acier inoxydable (E) dans laquelle sont noyées des particules de matériau dur (HP), **caractérisé en ce que**, lors de la production de la couche de recouvrement (D), le faisceau laser est dirigé sur la poudre d'acier inoxydable appliquée sur la couche intermédiaire (Z) avec une intensité laser qui est de 0,1 - 2,5 KW/mm² , **en ce que** le spot, dans lequel le faisceau laser rencontre la poudre d'acier inoxydable appliquée et dans lequel la poudre d'acier inoxydable est fondue pour former un bain de fusion, présente un diamètre de 2,5 à 15 mm, et **en ce que** des particules de matériau dure (HP), dont le diamètre moyen de grain est de 15 µm à 135 µm, sont ajoutées au bain de fusion ainsi formé.

6. Procédé selon la revendication 5, **caractérisé en ce que** les particules de matériau dur (HP) noyées dans la matrice en acier inoxydable (E) de la couche de recouvrement (D) présentent un diamètre moyen de grain de 105 µm au maximum, de préférence de 60 µm au maximum.

7. Procédé selon la revendication 5 ou 6, **caractérisé en ce que** les particules de matériau dur (HP) noyées dans la matrice en acier inoxydable (E) de la couche de recouvrement (D) présentent un diamètre moyen de grain d'au moins 20 µm.

8. Procédé selon la revendication 7, **caractérisé en ce que** les particules de matériau dur (HP) noyées dans la matrice en acier inoxydable (E) de la couche de recouvrement (D) présentent un diamètre moyen de grain d'au moins 45 µm.

9. Procédé selon l'une des revendications 5 à 8, **caractérisé en ce que** l'intensité laser du faisceau laser utilisé pour la production de la couche de recouvrement (D) est au maximum de 1,2 KW/mm2 .

10. Procédé selon les revendications 5 à 9, **caractérisé en ce que** la puissance laser du faisceau laser utilisé pour la production de la couche de recouvrement (D) est de 6 à 25 KW.

11. Procédé selon l'une des revendications 5 à 10, **caractérisé en ce que** le composant est préchauffée à une température de préchauffage de 100 à 700 °C avant l'impact du faisceau laser.

12. Procédé selon la revendication 11, **caractérisé en ce que** le composant est préchauffée dans son ensemble à la température de préchauffage avant l'application de la poudre d'acier inoxydable.

13. Procédé selon la revendication 11, **caractérisé en ce que** le composant est préchauffée de manière limitée localement à la température de préchauffage dans la section dans laquelle la poudre d'acier inoxydable est ensuite fondue par le faisceau laser.

14. Procédé selon la revendication 13, **caractérisé en ce que** le composant est préchauffée en avance au faisceau laser.

15. Procédé selon l'une des revendications 11 à 14, **caractérisé en ce que** le préchauffage est réalisé par chauffage inductif.
